# EUROPÄISCHE PATENTSCHRIFT

(11) **EP 0 244 712 B1**
(45) Veröffentlichungstag und Bekanntmachung des Hinweises auf die Patenterteilung: **04.08.1993**
(21) Anmeldenummer: 87106011.7
(22) Anmeldetag: 24.04.1987
(51) Int. Cl.: A01C 15/04, B05B 1/26

(54) **Vorrichtung zum pneumatischen Streuen von Dünger od. dgl.**
Apparatus for the pneumatic spreading of fertilizer
Dispositif d'épandage pneumatique d'engrais

(30) Priorität: 03.05.1986 DE 3615075
(43) Veröffentlichungstag der Anmeldung: 11.11.1987
(73) Patentinhaber: Rauch Landmaschinenfabrik GmbH, D-76545 Sinzheim (DE)
(72) Erfinder: Rauch, Norbert, Dipl.-Ing., D-7573 Sinzheim (DE)
(74) Vertreter: Dipl.-Ing. Heiner Lichti Dipl.-Phys. Dr.rer.nat. Jost Lempert Dipl.-Ing. Hartmut Lasch

(56) Entgegenhaltungen:
- FR-A- 2 018 849
- FR-A- 2 209 301
- GB-A- 9 985
- GB-A- 2 003 402
- GB-A- 2 095 523
- US-A- 1 836 505
- US-A- 2 199 142
- US-A- 2 550 456

## Beschreibung

Die Erfindung betrifft eine Vorrichtung zum pneumatischen Streuen von Dünger oder dergleichen mit den Merkmalen des Oberbegriffs des Patentanspruchs 1.

Vorrichtungen dieser Art sind als Gebläsestreuer vornehmlich in der Landwirtschaft zum Verteilen körniger Düngemittel, Unkrautvertilgungsmittel oder dergleichen im Einsatz, um mit Hilfe der weit ausladenden Streurohre breite Flächenstreifen gleichmäßig bestreuen zu können. Dabei kommt es darauf an, einerseits nur die pro Flächeneinheit unbedingt notwendige Streumenge auszutragen, andererseits das Streugut über die gesamte Streubreite absolut gleichmäßig zu verteilen. Hierfür sorgen zunächst die den Auslauföffnungen des Vorratsbehälters zugeordneten Dosierorgane, die jedem Streurohr eine bestimmte und für alle Streurohre gleiche Menge zuführen. Diese Dosierung wird heute mit einem sehr hohen Genauigkeitsgrad beherrscht. Damit ist sichergestellt, daß an jedem Krümmer die gleiche Menge an Dünger austritt. Bei der anschließenden Verteilung des Düngers durch Reflexion an den Prallplatten wird diese hohe Dosiergenauigkeit teilweise wieder zunichte gemacht. Es hat sich gezeigt, daß sowohl die Breite des einzelnen Streufächers als auch dessen Ausrichtung mit Bezug auf die Krümmerachse und schließlich auch die Kornverteilung innerhalb des Streufächers sich in Abhängigkeit von der Austrittsgeschwindigkeit, der Düngermenge und der Düngerform ändern. Auch die Lage der Streuvorrichtung hat hierbei einen negativen Einfluß, insbesondere wird das Streuergebnis schlechter, wenn beispielsweise auf hängigem Gelände gestreut wird. Dies führt dazu, daß eine absolut gleichmäßige Verteilung des Düngers bei der Mehrzahl der Betriebsbedingungen und Düngerarten nicht gegeben ist.

Für die Ausbildung ungleich breiter Streufächer und unsymmetrischer Massenverteilung innerhalb des Streufächers sind mehrere Einflußfaktoren verantwortlich. Während in den quer zur Fahrtrichtung verlaufenden Streurohren im allgemeinen eine gleichmäßige Gutbeladung des Förderstroms über den Querschnitt anzunehmen ist, wird diese gleichmäßige Massenverteilung im Bereich des Krümmers aufgehoben. Zunächst tritt im Krümmer aufgrund der Zentrifugalkräfte ein Abscheideeffekt ein, indem sich der Düngerstrom an der außenliegenden Wandung des Krümmers verdichtet, während an der innenliegenden Wandung eine Partikelverdünnung eintritt. Der an der Öffnung des Krümmers austretende Düngerstrahl weist also eine über den Querschnitt ungleichmäßige Partikeldichte auf. Dabei kann je nach Düngermenge die Partikeldichte auch in der Querschnittshöhe variieren. Diese Effekte hat man dadurch zu beheben versucht, daß man entweder für jedes Streurohr zwei Krümmer vorgesehen hat, die mit Abstand voneinander an je einer Prallplatte enden (DE-U 84 27 678), womit statistisch das Ergebnis zwar möglicherweise etwas verbessert wird, an jedem Streufächer aber die gleichen Unregelmäßigkeiten auftreten, oder man hat den endständigen Rohrkrümmer in mehrere Krümmer kleineren Querschnitts und unterschiedlicher Krümmung aufgegliedert (DE-A 27 18 841, 27 55 353, DE-C 30 47 245, 35 01 264). Damit ist zwar bereits eine Vergleichmäßigung des Streuergebnisses festzustellen, dennoch läßt sich weder eine Spiegelsymmetrie des Streufächers zur Krümmerachse, noch eine spiegelsymmetrische Massenverteilung innerhalb des Streufächers erreichen.

Andere Überlegungen basieren auf der Erkenntnis, daß zumindest ein großer Teil der Düngerpartikel beim Eintritt in den Krümmer an der außenliegenden Wandung entgegen ihrem Auftreffwinkel reflektiert werden und - bei den üblicherweise innenseitig offenen Krümmern - entweder gar nicht oder am äußeren Rand auf die Prallplatte gelangen, so daß der Dünger nicht in Form eines gebündelten Freistrahls auf die Prallplatte trifft. Gegebenenfalls kann das einzelne Partikel auch mehrfach reflektiert werden, was insbesondere bei rundrum geschlossenen Krümmern der Fall ist, so daß der Düngerstrahl am Krümmerende "zerreißt" und die Partikel an sehr unterschiedlichen Stellen auf die Prallplatte treffen. Je nach Fördergeschwindigkeit bzw. Düngermenge stellen sich bevorzugte Abgangsrichtungen ein, die zu einem unregelmäßigen Streubild führen. Diese Erkenntnis hat dazu geführt, den Querschnitt des Rohrkrümmers vom Streurohr bis zur Abgabeöffnung zu verengen, um die Möglichkeit der Reflexion zu mindern und den Düngerstrahl zu bündeln (DE-B-24 52 793). Auch bei dieser Ausführung variiert das Streubild in Abhängigkeit von der Düngermenge und der Kornform des Düngers.

Es ist weiterhin bekannt, das Streuergebnis durch Maßnahmen unmittelbar an der Prallplatte positiv zu beeinflussen, indem die Prallplatte in der Horizontalen in zwei Flächenabschnitte aufgeteilt ist, die einen unterschiedlichen Außenwinkel mit dem Krümmer bilden (DE-C-33 35 805). Hiermit wird insbesondere eine mengenunabhängige Vergleichmäßigung des Streuergebnisses erreicht. Unzulänglich ist die Lösung des Problems aber noch hinsichtlich der Düngerart bzw. der Kornform des Düngers. Bei einer anderen bekannten Ausführung (GB-A-2 095 523) ist die Prallplatte aus einer Art Wellblech gebildet, wobei der Zweck dieser Maßnahme nicht bekannt ist. Es kann jedoch angenommen werden, daß hierdurch eine größere Breitenwirkung angestrebt wird. Eine gleichmäßigere Verteilung des Streugutes jedoch kann hiermit keinesfalls erreicht werden, zumal alle auf die Wellenflanken und in die Wellentäler treffenden Partikel vorwiegend unmittelbar nach unten reflektiert werden.

Bei einer anderen Art von Düngerstreuern (DE-C-1 159 680), bei denen der Dünger an den Enden von geeigneten, geradlinigen Streurinnen allein unter Schwerkraft nach unten abläuft, sind unterhalb der Ablaufkante Fangbleche angeordnet, die mit Stiften oder Unebenheiten versehen sind. Auf den Fangblechen soll der Dünger mittels der Stifte aufgestaut und zu den Plattenrändern hin verteilt werden. Die strömungsdynamischen Vorgänge und die dadurch bedingte Orientierung der Düngerpartikel im Förderstrom, wie sie bei einem pneumatischen Düngerstreuer gegeben sind, liegen hier nicht vor.

Schließlich ist es bei pneumatischen Sämaschinen (US-A-4 280 419), bei denen das Saatgut mittels breiter Schlitzdüsen annähernd senkrecht nach unten ausgetragen wird, bekannt, in der sich nach außen erweiternden Düse Einbauten verschiedener Kontur einzusetzen, um den gebündelt ankommenden Strahl in definierten Richtungen aufzuweiten, so daß er über der gesamten Breite der Schlitzdüse in gleichmäßiger Verteilung austritt. Eine solche definierte Aufteilung in Einzelströme und deren genaue Ausrichtung ist bei pneumatischen Düngerstreuern aufgrund der andersartigen Strömungsdynamik und der fehlenden Seitenbegrenzung an den Prallplatten nicht möglich und auch nicht erwünscht, da eine wesentlich größere Breitverteilung des Düngers notwendig ist. Im übrigen sind Breitschlitzdüsen mit Einbauten für die Düngerverteilung nicht geeignet, da sie durch Anbacken von Dünger in nur kurzer Zeit verstopfen. Gleiches gilt für eine bekannte Breitschlitzdüse (SU-A-858 614) für Sämaschinene oder Düngerstreuer. Sie weist in dem sich allmählich erweiternden Einlaufbereich innenseitig Vorsprünge auf, die die Partikelströmung in erster Linie aufweiten. Auch hier fehlen Prallplatten und wird am Ausgang der Düse kein Streufächer gebildet.

Ausgehend von der Vorrichtung des eingangs genannten Aufbaus (DE-C- 3 335 805) liegt der Erfindung die Aufgabe zugrunde, durch einfache konstruktive Maßnahmen an der Prallplatte und im wesentlichen unabhängig von Art und Form der Krümmer eine spiegelsymmetrische Ausbildung des Streufächers und eine ebenso spiegelsymmetrische Massenverteilung innerhalb des Streufächers zu erreichen.

Diese Aufgabe wird erfindungsgemäß dadurch gelöst, daß jede Prallplatte nach Art eines Warzenblechs mit ebener Grundfläche ausgebildet ist und zumindest im Aufprallbereich des Düngerstrahls mit einer Vielzahl von über ihrer Oberfläche verteilten, die Unebenheiten bildenden Warzen versehen ist.

Praktische Versuche haben überraschend gezeigt, daß mit einer solchermaßen ausgebildeten Prallplatte ein spiegelsymmetrisches Streubild erhalten wird, und zwar unabhängig von der Austrittsgeschwindigkeit des Düngers, der austretenden Düngermenge und auch unabhängig von der Art (Partikelform) des Düngers. Die Ursache für diesen überraschenden Effekt läßt sich wie folgt vermuten: Die Reflexionswinkel eines Partikels an einer Fläche hängen nicht allein vom Auftreffwinkel ab, sondern auch von der Partikelform und von der Struktur der Oberfläche an der reflektierenden Fläche. Trifft eine pro Zeiteinheit kleine Partikelmenge auf eine ebene Fläche, so werden diese Partikel statistisch gleichmäßig reflektiert, jedoch entsprechend den Reflexionsgesetzen im wesentlichen nur nach unten. Eine Verteilung zur Seite hin kommt mehr oder weniger nur zufällig dann zustande, wenn die Partikelform von der Kugelform abweicht und das Partikel beim Aufprallen auf die Reflexionsfläche zugleich kippt oder dergleichen. Dies führt dazu, daß bei kleinen Mengen der Streufächer relativ schmal ist. Im übrigen hängt die Symmetrie des Streufächers sehr wesentlich von einer exakten 90°-Lage der Durchdringungslinie von Prallplatten- und Krümmerebene zur Krümmerachse ab. Kleine Winkeländerungen bewirken eine starke Verlagerung und auch Verformung des Streufächers.

Bei großer Partikeldichte trifft das einzelne Partikel in der Regel nicht mehr auf die ebene Reflexionsfläche der Prallplatte, sondern auf ein dort gerade auf- oder zurückprallendes Partikel mit der Folge, daß es unter einem nicht vorhersehbaren Winkel reflektiert. Je größer die Partikeldichte ist, umso größer ist die Wahrscheinlichkeit, daß der Streufächer ausschließlich durch Partikelkollisionen zustandekommt, wobei die Prallplatte im wesentlichen nur noch den Abgangswinkel des Streufächers bestimmt. Diese Vermutung deckt sich mit der Feststellung, daß die Spiegelsymmetrie des Fächers und der Massenverteilung umso besser ist, je größer die Düngermenge pro Zeiteinheit ist.

Durch die erfindungsgemäße Ausbildung einer Vielzahl von Warzen auf der Prallplatte wird nun der Effekt erreicht, daß auch bei kleinerer Düngemenge nicht mehr eine Reflexion an einer ebenen Fläche erfolgt, sondern das einzelne Partikel an der Prallplatte ähnliche Verhältnisse vorfindet, als ob eine Vielzahl von Düngerpartikeln gleichzeitig an der Prallplatte reflektieren, so daß auch bei geringen Düngermengen an der Prallplatte die gleichen Reflexionsverhältnisse "simuliert" werden, wie an einer ebenen Prallplatte bei großer Düngermenge. Damit ergibt sich auch bei kleiner Düngermenge ein spiegelsymmetrischer Streufächer mit spiegelsymmetrischer Massenverteilung innerhalb des Streufächers. Andererseits wird durch diese Warzen an der Prallplatte das Streubild bei großen Düngermengen nicht verschlechtert, da dann im wesentlichen die gleichen Verhältnisse wie bei einer ebenen Prallplatte vorliegen.

Es hat sich weiterhin gezeigt, daß die spiegelsymmetrische Verteilung auch bei unterschiedlichen Düngerarten erhalten bleibt, wobei auch hier anzunehmen ist, daß die Reflexionsverhältnisse aufgrund der Vielzahl der Warzen auf der Prallplatte statistisch vergleichmäßigt werden.

Bei den zuvor geschilderten bekannten Maßnahmen zur Verbesserung des Streubildes ist es bisher nicht möglich gewesen, einen gleichbreiten Streufächer unabhängig von der Düngermenge zu erhalten. So ist der Streufächer bei kleinen Mengen schmaler als bei großen Mengen. Es muß deshalb die Fördergeschwindigkeit so eingestellt und der Abstand der Prallplatte so abgestimmt werden, daß sich die Streufächer benachbarter Prallplatten bei den kleinsten in Frage kommenden Düngermengen zumindest berühren oder geringfügig überlappen, um nicht ungedüngte Streifen zu hinterlassen. Dies führt zwangsläufig dazu, daß bei großen Düngermengen eine größere Überlappung der Streufächer gegeben ist, so daß im Überlappungsbereich eine Überdüngung stattfindet. Dies ließe sich zwar durch jeweilige Anpassung der Fördergeschwindigkeit durch Variation der Drehzahl des Gebläses ausgleichen, doch wäre eine solche Antriebssteuerung aufwendig. Bei der erfindungsgemäßen Ausbildung der Prallplatte hat sich weiterhin überraschend gezeigt, daß auch dieser negative Effekt beseitigt ist, da der Streufächer auch bei kleinen Düngermengen ausreichend aufgeweitet wird. Dadurch läßt sich bei gegebener konstanter Fördergeschwindigkeit der Abstand der Krümmer- bzw. Prallplatten voneinander vergrößern, was insbesondere bei großen Streubreiten zu einer entsprechenden Ersparnis an Material-, Fertigungs- und Montagekosten führt. Auch beim Arbeiten in hängigem Gelände, bei dem der Düngerstrahl in ansteigenden Streurohren an deren unteren Scheitel und bei abfallenden Streurohren an deren oberen Scheitel gedrängt wird, ergibt sich eine Vergleichmäßigung des Streubildes aufgrund der statistisch gleichbleibenden Reflexionsverhältnisse an der Prallplatte. Auch die Winkelstellung der Prallplatte zur Krümmerebene ist nicht mehr so entscheidend für die Symmetrie, wie auch der Abgangswinkel des Düngerstrahls bzw. dessen Verlagerung wesentlich weniger kritisch ist.

Bei pneumatischen Sämaschine ist es bekannt (DE-A-33 00 444), auf dem Prinzip des üblichen pneumatischen Düngerstreuers aufbauend an jeden Streurohranschluß statt Streurohre Schlauchleitungen anzuschließen, die jeweils in einen den Förderstrom aufweitenden Verteiler übergehen. An der breiten Abgangsseite des Verteilers, der im übrigen den Förderstrom des Saatgutes in der Art eines Krümmers um 270° senkrecht nach unten lenkt, sind wiederum mehrere Schläuche angeschlossen, die an ihrem unteren Ende die Säschare tragen. Um den Förderstrom auf die breite Abgangsseite des Verteilers aufzuweiten, sind die Wandungen des Verteilers mit Unebenheiten nach Art von Warzenblechen versehen. Die besonderen Probleme, die sich bei der Verteilung an der Prallplatte eines pneumatischen Düngerstreuers stellen, nämlich die Reflexion eines Freistrahls, sind bei diesem Stand der Technik nicht angesprochen.

In bevorzugter Ausbildung sind die Warzen in gleichmäßiger Verteilung an der Prallplatte angeordnet, so daß statistisch gesehen eine Mehrzahl von auftreffenden Partikeln stets eine gleich unregelmäßige Reflexionsfläche vorfindet.

Die Warzen können gemäß einem weiteren Ausführungsbeispiel hinsichtlich ihrer Grundfläche und ihrer Höhe etwa der Korngröße des Düngers angepaßt sein. Dabei wird man in der Regel eine durchschnittliche Korngröße annehmen. Stattdessen können auch Warzen unterschiedlicher Grundfläche und Höhe vorgesehen sein, die dann aber in statistisch gleichmäßiger Verteilung angeordnet sein sollten.

In weiterer Abwandlung der Erfindung ist vorgesehen, daß die Warzen eine längliche Form aufweisen, deren Längsachse etwa in einer Vertikalebene liegt. Hierbei kann es sich beispielsweise um eine längliche, an den Schmalseiten abgerundete, z. B. eine ovale Form handeln. Die Längsachse sollte dabei allerdings nicht wesentlich länger sein als die kurze Achse, da sonst wieder ein Richteffekt eintritt. Mit dieser Form der Warzen ergibt sich bezüglich der Auftreffrichtung des einzelnen Partikels eine bevorzugte Reflexionsrichtung zu beiden Seiten hin, was die Ausbreitung des Streufächers begünstigt.

In Abwandlung hiervon hat es sich als günstig erwiesen, wenn die Warzen eine zur Abflugkante der Prallplatte zunehmende Höhe und/oder Breite aufweisen, insbesondere tropfenförmig ausgebildet sind. Dabei ist von Vorteil, wenn die Warzen aus der Ebene der Prallplatte allmählich ansteigende Höhe aufweisen. Durch diese Ausbildung wird einerseits die Breitverteilung unterstützt, andererseits vermieden, daß die auftreffenden Partikel nach rückwärts oder nach oben reflektiert werden. Dies gilt insbesondere bei solchen Streuern, bei denen die Prallplatten in verschiedenen Winkelpositionen einstellbar sind, um beispielsweise neben der Normaldüngung auch eine Spätdüngung bei aufgewachsenen Pflanzen durchführen zu können.

In weiterer Ausgestaltung der Erfindung ist die Prallplatte am Krümmer auswechselbar festgelegt und sind Prallplatten mit unterschiedlicher Form, Größe und Anordnung der Warzen in Anpassung an verschiedene Düngersorten vorgesehen. Diese Ausbildung empfiehlt sich insbesondere dann, wenn die Streuvorrichtung beispielsweise auch für Mikrogranulat eingesetzt wird.

Schließlich ist vorgesehen, daß - wie an sich bekannt - der Krümmer einen sich zum Abgabeende hin verengenden, freien Querschnitt aufweist, um den Düngerstrahl zu bündeln und sicherzustellen, daß alle Partikel auf die Prallplatte auftreffen.

Nachstehend ist die Erfindung anhand eines in der Zeichnung wiedergegebenen Ausführungsbeispiels beschrieben. In der Zeichnung zeigen:
- Figur 1: Eine schematische Ansicht auf die Frontseite eines Ausführungsbeispiels der Vorrichtung;
- Figur 2: eine Draufsicht auf die rechte Hälfte der Vorrichtung gem.Fig.1, teilweise abgebrochen;
- Figur 3: eine Draufsicht auf den Krümmer am Ende eines Streurohrs;
- Figur 4: eine Abwicklung des Krümmers gemäß Fig.3 mit Blickrichtung vom Zentrum des Krümmers;
- Figur 5: eine perspektivische Ansicht auf die Prallseite einer Prallplatte;
- Figur 6: eine der Fig.5 ähnliche Ansicht einer Prallplatte in anderer Ausführung;
- Figur 7: eine Seitenansicht der Prallplatte gem. Fig.6 und
- Figur 8: eine der Fig.4 entsprechende Ansicht des Krümmers mit einer anderen Stellung der Prallplatte.

Die Vorrichtung zum Streuen von schüttfähigem Gut, insbesondere Dünger, ist beispielsweise an dem nicht gezeigten Dreipunktgestänge eines Schleppers angebracht. Sie weist einen relativ breiten Vorratsbehälter 1 auf, dessen Bodenflächen 2 und Seitenwände 4 (im unteren Bereich) zueinander und zu einer schlitzartigen Auslauföffnung 3 konvergieren.

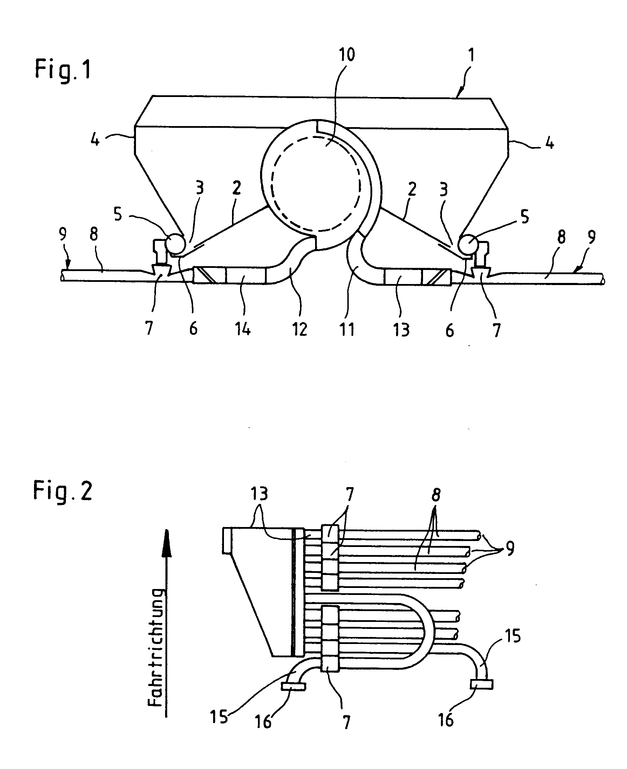

Unmittelbar vor den Auslauföffnungen sind Dosierorgange 5, z.B. in Form von Nockenrädern angeordnet, die von Leitblechen 6 unterfangen sind. Unterhalb der Dosierorgane sind Auffangschalen 7 angeordnet, die je einem Streurohr 8 einer Streueinrichtung 9 zugeordnet sind. Je eine Streueinrichtung 9 erstreckt sich quer zur Fahrtrichtung (Fig.2) zu beiden Seiten der Längsachse.

An der Frontseite des Vorratsbehälters 1 ist ein Gebläse 10 angeordnet, dessen druckseitige Abgänge 11,12 an je einen Verteilerkasten 13,14 angeschlossen sind. Von dort wird die Druckluft auf die einzelnen Streurohre 8 aufgeteilt. Sie durchströmt unmittelbar unterhalb der Auffangschalen 7 einen Injektor, in den das Streugut zugeführt und beschleunigt wird.

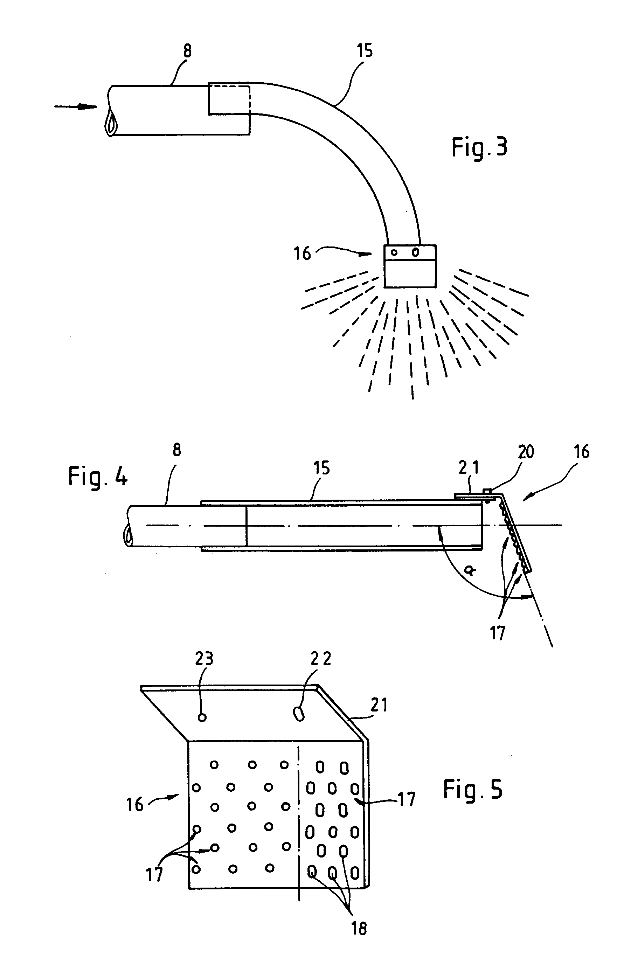

Die Streurohre enden in unterschiedlichem Abstand von der Längsachse in Krümmern 15, die nach hinten weisen. Vor der Abgabeöffnung der Krümmer ist eine Prallplatte 16 angeordnet, die nach hinten und unten unter einem Winkel angestellt ist. Beispielsweise schließt die Prallplatte, wie Fig.4 erkennen läßt, mit der Achse des Streurohrs bzw. des Krümmers einen Winkel α ein. Im übrigen ist die Prallplatte von einem ebenen Flächenabschnitt eines Metallblechs oder einer Kunststoffplatte gebildet.

Bei der Ausführungsform gem.Figuren 3 und 4 ist der Krümmer 15 nicht als Vollrohr ausgebildet, sondern lediglich als gekrümmtes Leitorgan, das beispielsweise U-förmigen Querschnitt aufweist und den das Streurohr 8 verlassenden Materialstrom nur außenseitig führt und nach hinten umlenkt.

Die Prallplatte 16 ist mittels Schrauben 20 an Stegblechen des Krümmers befestigt. Dabei kann der Steg 21 jeder Prallplatte ein Langloch 22 aufweisen, so daß die Prallplatte um den anderen Befestigungspunkt 23 und damit um eine senkrechte Achse etwas geschwenkt werden kann. Damit ist es möglich, die Prallplatte unter einem exakten Winkel zur Krümmerachse zu montieren.

Die Prallplatte 16 kann auch an die Unterseite des Krümmers 15 (s. Figur 4) umgesetzt werden, so daß sie nach hinten oben geneigt ist (Spätdüngung).

Wie aus Fig. 5 ersichtlich, ist die Prallplatte als Warzenplatte ausgebildet und auf ihrer Innenseite, mit der sie dem Abgabeende des Krümmers 15 zugekehrt ist, mit einer Vielzahl von Warzen 17 versehen. Die Warzen oder einzelne von ihnen können auch, wie im rechten Teil der Darstellung bei 18 angedeutet, eine länglich ovale Form aufweisen. In jedem Fall sollten die Warzen gleichmäßig verteilt sein und, sofern verschieden geformte Warzen vorgesehen sind, diese gleichfalls in gleichmäßiger Verteilung angeordnet sein. Hierbei gibt die Zeichnung nur ein schematisches Bild. Es können die Warzen beispielsweise viel enger sitzen als angedeutet.

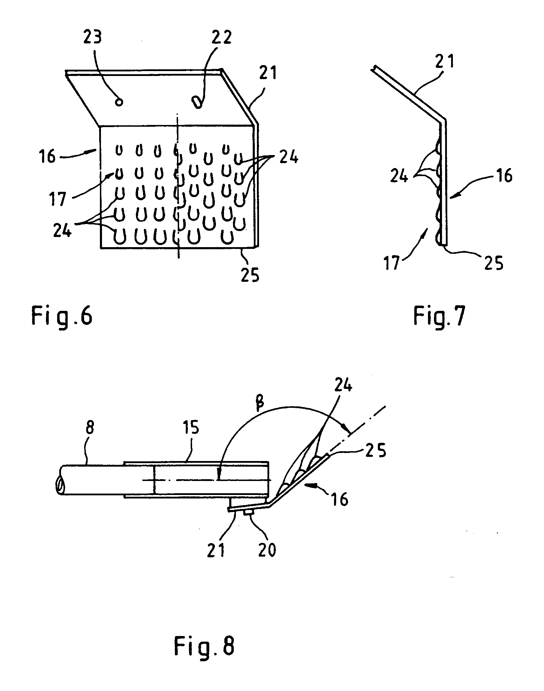

Bei der Ausführungsform gem. Fig. 6 bis 8 sind die Warzen 17 an der Prallplatte 16 nach Art von Tropfen 24 ausgebildet, die eine zur Abflugkante 25 der Prallplatte zunehmende Höhe und Breite aufweisen, wie insbesondere aus den Figuren 6 und 7 ersichtlich ist. Die tropfenförmigen Warzen 24 können, wie in der linken Hälfte der Fig. 6 gezeigt, in parallelen Reihen untereinander oder mit gegenseitigem Versatz der Reihen, wie die rechte Hälfte zeigt, angeordnet sein.

Figur 8 zeigt eine Anordnung der Prallplatte 16 an der Unterseite des Krümmers 15, wie sie für die Spätdüngung vorgesehen ist. Dabei schließt die Prallplatte mit der Krümmerebene einen flacheren Winkel β ein als der Winkel α bei der in Figur 4 gezeigte Normaldüngung. Aus der Darstellung wird deutlich, daß durch die allmählich zunehmende Höhe der Warzen 24 eine Reflexion der Düngerpartikel nach hinten oder unten praktisch nicht eintreten kann.

## Patentansprüche

1. Vorrichtung zum pneumatischen Streuen von Dünger oder dergleichen, bestehend aus einem aufgesattelten oder fahrbaren Vorratsbehälter (1) mit Auslauföffnungen (3), diesen zugeordneten Dosierorganen (5) und daran anschließenden, sich quer zur Fahrtrichtung erstreckenden Streurohren (8), die in unterschiedlichem Abstand von der Behälterachse das Streugut nach hinten ablenkende Krümmer (15) aufweisen, sowie in Strömungsrichtung nach deren Abgabeende angeordnete, gegenüber der Krümmerebene geneigte Prallplatten (16), die auf ihrer Prallfläche Unebenheiten (17) aufweisen und den als Freistrahl auftreffenden Düngerstrahl zu einem Streufächer reflektieren, **dadurch gekennzeichnet,** daß jede Prallplatte (16) nach Art eines Warzenblechs mit ebener Grundfläche ausgebildet ist und zumindest im Aufprallbereich des Düngerstrahls mit einer Vielzahl von über ihrer Oberfläche verteilten, die Unebenheiten bildenden Warzen (17) versehen ist.

2. Vorrichtung nach Anspruch 1, dadurch gekennzeichnet, daß die Warzen (17) in gleichmäßiger Verteilung angeordnet sind.

3. Vorrichtung nach einem der Ansprüche 1 oder 2, dadurch gekennzeichnet, daß die Warzen (17) hinsichtlich ihrer Grundfläche und Ihrer Höhe etwa der Korngröße des Düngers angepaßt sind.

4. Vorrichtung nach Anspruch 1 oder 2, dadurch gekennzeichnet, daß die Warzen (17) mit unterschiedlicher Grundfläche und Höhe vorgesehen sind.

5. Vorrichtung nach Anspruch 4, dadurch gekennzeichnet, daß die Warzen (17) unterschiedlicher Grundfläche und Höhe in gleichmäßiger Verteilung angeordnet sind.

6. Vorrichtung nach einem der Ansprüche 1 bis 5, dadurch gekennzeichnet, daß die Warzen (18) eine längliche Form (17) aufweisen, deren Längsachsen etwa in einer Vertikalebene liegt.

7. Vorrichtung nach einem der Ansprüche 1 bis 6, dadurch gekennzeichnet, daß die Warzen (17) eine zur Abflugkante (25) der Prallplatte zunehmende Höhe und/oder Breite aufweisen.

8. Vorrichtung nach Anspruch 7, dadurch gekennzeichnet, daß die Warzen (17) eine aus der Ebene der Prallplatte zur Abflugkante allmählich ansteigende Höhe aufweisen.

9. Vorrichtung nach einem der Ansprüche 1 bis 8, dadurch gekennzeichnet, daß die Warzen (17) tropfenförmig ausgebildet sind.

10. Vorrichtung nach einem der Ansprüche 1 bis 9, dadurch gekennzeichnet, daß die Prallplatte (16) am Krümmer (15) auswechselbar festgelegt ist und Prallplatten mit unterschiedlicher Form, Größe und Anordnung der Warzen (17) in Anpassung an verschiedene Düngersorten vorgesehen sind.

11. Vorrichtung nach einem der Ansprüche 1 bis 10, dadurch gekennzeichnet, daß der Krümmer (15) einen sich zum Abgabeende hin verengenden freien Querschnitt aufweist.

## Claims

1. Apparatus for the pneumatic spreading of fertilizer or the like, comprising an engaged on or movable storage container (1) with outlet openings (3), dosing members (5) associated therewith and spreading pipes (8) connected thereto and extending transversely to the direction of travel and which with a varying spacing from the container axis have bends (15) rearwardly deflecting the spreading material, as well as impact or baffle plates (16) inclined with respect to the bend plane and located in the flow direction following the discharge end thereof, said plates having on their impact surface unevennesses (17) and which reflect the fertilizer jet impacting as a free jet so as to form a spreading fan, characterized in that each impact plate (16) is constructed in the manner of a studded plate with a planar base surface and is provided at least in the fertilizer jet impact area with a plurality of studs (17) distributed over the surface thereof and forming the unevennesses.

2. Apparatus according to claim 1, characterized in that the studs (17) are uniformly distributed.

3. Apparatus according to one of the claims 1 or 2, characterized in that the studs (17) are adapted with regards to their base surface and height approximately to the fertilizer particle size.

4. Apparatus according to claim 1 or 2, characterized in that the studs (17) have different base surfaces and heights.

5. Apparatus according to claim 4, characterized in that the studs (17) are uniformly distributed with different base surfaces and heights.

6. Apparatus according to one of the claims 1 to 5, characterized in that the studs (18) have an elongated shape (17), whose longitudinal axes are roughly located in a vertical plane.

7. Apparatus according to one of the claims 1 to 6, characterized in that the studs (17) have a height and/or width increasing towards the fly-off edge (25) of the impact plate.

8. Apparatus according to claim 7, characterized in that the studs (17) have a height which gradually increases from the impact plate plane to the fly-off edge.

9. Apparatus according to one of the claims 1 to 8, characterized in that the studs (17) are tear-shaped.

10. Apparatus according to one of the claims 1 to 9, characterized in that the impact plate (16) is interchangeably fixed to the bend (15) and there are impact plates with different shapes, sizes and arrangements of the studs (17) so as to adapt to different fertilizer types.

11. Apparatus according to one of the claims 1 to 10, characterized in that the bend (15) has a free cross-section tapering towards the discharge end.

## Revendications

1. Dispositif d'épandage pneumatique d'engrais ou analogue, comprenant un réservoir de stockage (1) porté ou tractable comportant des ouvertures d'écoulement (3), des organes de dosage (5) adaptés à celles-ci, et des conduits d'épandage (8) rapportés sur ceux-ci s'étendant transversalement à la direction de déplacement, ces conduits d'épandage présentant à des écartements différents de l'axe du réservoir des coudes (15) déviant le produit à épandre vers l'arrière, ainsi que des plaques de renvoi (16) disposées au-delà de leur extrémité de sortie dans la direction du flux et inclinées par rapport au plan des coudes, ces plaques de renvoi (16) présentant sur leur surface de renvoi des aspérités (17) et renvoyant en un éventail d'épandage le faisceau d'engrais qui arrive en faisceau libre, caractérisé en ce que chaque plaque de renvoi (16) est formée par une tôle nervurée comportant des saillies et une surface de base plane et se trouve pourvue d'une pluralité d'aspérités (17) qui s'étendent au moins dans la surface d'impact du faisceau d'engrais, et forment les saillies d'aspérités réparties sur sa superficie.

2. Dispositif selon la revendication 1, caractérisé en ce que les apérités (17) sont réparties uniformément.

3. Dispositif selon les revendications 1 ou 2, caractérisé en ce que les apérités correspondent approximativement par leur surface de base et leur hauteur à la taille des granulés d'engrais.

4. Dispositif selon les revendications 1 ou 2, caractérisé en ce que les aspérités sont prévues avec des surfaces de base et des épaisseurs différentes.

5. Dispositif selon la revendication 4, caractérisé en ce que les aspérités (17) de surfaces de base et d'épaisseurs différentes sont disposées suivant une répartition régulière.

6. Dispositif selon les revendications 1 à 5, caractérisé en ce que les aspérités (17) présentent une forme (18) allongée, dont l'axe longitudinal est approximativement contenu dans un plan vertical.

7. Dispositif selon les revendications 1 à 6, caractérisé en ce que les aspérités (17) présentent une hauteur et/ou une largeur augmentant vers l'arête d'envoi de la plaque de renvoi.

8. Dispositif selon la revendication 7, caractérisé en ce que les aspérités (17) présentent une hauteur augmentant peu à peu depuis le plan de la plaque de renvoi jusqu'à l'arête d'envoi.

9. Dispositif selon les revendications 1 à 8, caractérisé en ce que les aspérités (17) sont conformées en gouttes.

10. Dispositif selon les revendications 1 à 9, caractérisé en ce que la plaque de renvoi (16) est fixée au coude (15) de manière amovible, et en ce qu'il est prévu des plaques de renvoi pourvues d'aspérités (17) de formes, tailles et dispositions différentes, conformes aux différents types d'engrais.

11. Dispositif selon les revendications 1 à 10, caractérisé en ce que le coude (15) présente une section intérieure se réduisant vers la sortie.
